# EUROPEAN PATENT APPLICATION

(11) **EP 2 555 283 A1**
(43) Date of publication of application: **06.02.2013**
(21) Application number: 11765312.1
(22) Date of filing: 10.03.2011
(51) Int. Cl.: H01M 4/131, H01M 4/525, H01M 4/62, H01M 10/052, H01M 10/0566

(54) **NONAQUEOUS ELECTROLYTE SECONDARY BATTERY**

(30) Priority: 01.04.2010 JP 2010084730
(71) Applicant: Sanyo Electric Co., Ltd., Osaka 570-8677 (JP)
(72) Inventor: SUZUKI, Akihiro, Moriguchi-shi Osaka 570-8677 (JP); NINA, Fumiharu, Moriguchi-shi Osaka 570-8677 (JP); TODE, Shingo, Moriguchi-shi Osaka 570-8677 (JP); YOSHIDA, Toshikazu, Moriguchi-shi Osaka 570-8677 (JP); KIDA, Yoshinori, Moriguchi-shi Osaka 570-8677 (JP)
(74) Representative: Töpken, Enno
(86) International application number: PCT/JP2011/055657
(87) International publication number: WO 2011/125410

(57) **Abstract**

In a nonaqueous electrolyte secondary battery including a positive electrode (11) whose surface has a positive electrode mixture layer containing a mixture of a conductive carbon material and a positive electrode active material containing a lithium-containing transition metal composite oxide having a layer structure and represented by the general formula LiₐNiₓM₍₁₋ₓ₎O₂ (where M represents one or more kinds of elements, and a and x satisfy the conditions 0<a≤1.2 and 0.4≤x≤1, respectively), the proportion of carbon atoms relative to the total atoms on the surface of the positive electrode is made to be not less than 80%.

## Description

### TECHNICAL FIELD

The present invention relates to a nonaqueous electrolyte secondary battery that has a positive electrode containing a positive electrode active material, a negative electrode containing a negative electrode active material, and a nonaqueous electrolyte in which a solute is dissolved in a nonaqueous solvent. More particularly, it relates to such a battery wherein, when a lithium-containing transition metal composite oxide that has a layer structure and contains a large amount of nickel as transition metal is used as the positive electrode active material, degradation of the lithium-containing transition metal composite oxide due to being exposed to the atmosphere is curbed, so that the output characteristics following atmospheric exposure are improved, and in particular the decline in low-temperature output characteristics is ameliorated.

### BACKGROUND ART

Over recent years, there have been marked advances in smaller size and lighter weight for mobile equipment such as mobile telephones, notebook personal computers and PDAs, and the electricity consumption of such equipment has increased as such equipment has become more multifunctional, so that there is also an increasing desire for lighter weight and higher capacity of the nonaqueous electrolyte secondary batteries that are used as the power sources for such equipment.

In recent years, progress has been made with the development of hybrid electric vehicles that combine an automobile gasoline engine with an electric motor in order to resolve environmental problems due to exhaust gas from vehicles.

Although nickel-hydrogen storage batteries are in general and widespread use as the power sources for such electric vehicles, the use of nonaqueous electrolyte secondary batteries is being considered, as these are higher-capacity and higher-output power sources.

As the positive electrode active material of the positive electrode in such nonaqueous electrolyte secondary batteries, a lithium-containing transition metal composite oxide that has cobalt in the form of lithium cobalt oxide (LiCoO₂) or other forms as main constituent is mainly used.

However, the cobalt used in such positive electrode active material is a rare resource and high in cost, and moreover involves problems such as the difficulty of a stable supply, and in particular the problem that since large amounts of cobalt are required in the case of use as power sources for hybrid electric vehicles or the like, the cost as power sources becomes very high.

Therefore, in recent years, positive electrode active material that has nickel instead of cobalt as main ingredient has been considered, as a positive electrode active material that can be supplied stably at low cost.

For example, there are expectations of lithium cobalt oxide (LiCoO₂), which has a layer structure, as a material from which a large discharge capacity can be obtained, but its thermal stability at high temperature is insufficient, besides it has the problems of large overvoltage, of degradation when exposed to the atmosphere to decrease the discharge capacity and output, and of being difficult to handle under atmospheric conditions.

Lithium-containing transition metal composite oxide, which has a layer structure and whose transition metal main constituents consist of the two elements nickel and manganese, has been the focus of attention in recent years as a positive electrode active material that is low in cost and has superior thermal stability.

Compared with lithium cobalt oxide, however, lithium-containing transition metal composite oxide, which has a layer structure and whose transition metal main constituents consist of the two elements nickel and manganese, has markedly inferior high cycling characteristics and has the problem of being difficult to handle under atmospheric conditions.

Patent Document 1 proposes, for a lithium-containing transition metal composite oxide that has a layer structure and contains at least nickel and manganese, a single-phase cathode material in which part of the nickel and manganese is replaced with cobalt.

Even in the case of the single-phase cathode material set forth in Patent Document 1; however, there is the problem that in areas where the nickel content is high, the discharge capacity and output will decline when exposed to the atmosphere.

Patent Document 2 proposes, for such high nickel-content lithium-containing transition metal composite oxide that is difficult to handle under atmospheric conditions, the provision of a surface layer treated with coupling agent on the surface of the positive electrode mixture layer, thereby raising the moisture absorbency resistance of the positive electrode mixture layer surface, curbing property changes in the positive electrode mixture layer surface due to moisture absorption, improving the cycling characteristics, and also curbing increase in the battery thickness.

However, when a surface layer treated with coupling agent is provided on the surface of the positive electrode mixture layer as set forth in Patent Document 2, there is the problem that entry and exit of lithium ions at the positive electrode will be inhibited by the surface treatment layer, so that the output characteristics will decline greatly.

Patent Document 3 proposes forming a conductive covering layer using carbon material or other materials on the surface of the primary particles of the positive electrode active material, thereby curbing volume variation of the positive electrode active material layer due to cycling, and curbing the positive electrode active material particles from becoming isolated from the conductive network inside the positive electrode active material layer, so that the nonaqueous secondary battery is rendered high-capacity and long-life.

However, even in the case where a conductive covering layer using carbon material or other materials is formed on the surface of the primary particles of the positive electrode active material as set forth in Patent Document 3, there is the problem that that entry and exit of lithium ions into the positive electrode active material will be inhibited, so that the output characteristics will decline greatly.

### Prior Art Documents

### Patent Documents

Patent Document 1: Japanese Patent No. 3571671
Patent Document 2: JP-A-2008-235090
Patent Document 3: JP-A-2008-270175

### DISCLOSURE OF INVENTION

### PROBLEM TO BE SOLVED BY THE INVENTION

The problem to be solved by the invention is the above-described problem in a nonaqueous electrolyte secondary battery that has a positive electrode containing a positive electrode active material, a negative electrode containing a negative electrode active material, and a nonaqueous electrolyte in which a solute is dissolved in a nonaqueous solvent.

More precisely, the problem for the invention is, in the case where a lithium-containing transition metal composite oxide that has a layer structure and contains a large amount of nickel as transition metal is used for the positive electrode active material, to curb degradation of the lithium-containing transition metal composite oxide through being exposed to the atmosphere, and thereby to prevent decline in the output characteristics following atmospheric exposure, and in particular the low-temperature output characteristics.

### MEANS FOR SOLVING PROBLEM

In order to solve the foregoing problem, the present invention provides a nonaqueous electrolyte secondary battery including a positive electrode whose surface has a positive electrode mixture layer containing a mixture of a positive electrode active material and a conductive carbon material; a negative electrode containing a negative electrode active material. A nonaqueous electrolyte in which a solute is dissolved in a nonaqueous solvent, a lithium-containing transition metal composite oxide having a layer structure and represented by the general formula LiₐNiₓM_{(1 - x)}O₂ (where M represents one or more kinds of elements, and a and x satisfy the conditions 0<a≤1.2 and 0.4≤x≤1, respectively) being used as the positive electrode active material; and the proportion of carbon atoms relative to the total atoms on the surface of the positive electrode being made to be not less than 80%.

The above-mentioned proportion of carbon atoms relative to the total atoms on the surface of the positive electrode is a value that was measured using an energy-dispersive X-ray fluorescence analyzer (EDX).

The use of an item with nickel in the mole ratio of 0.4 as the lithium-containing transition metal composite oxide used as the positive electrode active material is in order to raise the charge-discharge capacity for the positive electrode active material. Furthermore, when such a lithium-containing transition metal composite oxide with a large proportion of nickel is used as the positive electrode active material, the positive electrode active material will readily absorb moisture and degrade upon being exposed to the atmosphere, as described above.

There is no particular restriction on M of the lithium-containing transition metal composite oxide set forth in the foregoing general formula, and provided that it will constitute a lithium-containing transition metal composite oxide having a layer structure, M may be at least one element selected from, for example, Co, Al, Mn, Cu, Mg, Ba, Ti, Zr and Nb. More preferably, it will be at least one element selected from Co, Al, and Mn.

Moreover, with the proportion of carbon atoms relative to the total atoms being not less than 80% on the surface of the positive electrode having a positive electrode mixture layer containing a mixture of the lithium-containing transition metal composite oxide and a conductive carbon material, the positive electrode active material, which contains lithium-containing transition metal composite oxide with a high proportion of Ni, will be curbed from degrading upon exposure to the atmosphere.

In the invention, the mixture is of the lithium-containing transition metal composite oxide and the conductive carbon material only, so that there is none of the inhibition of lithium ion insertion/extraction at the positive electrode due to surface treatment with a coupling agent provided on the positive electrode mixture layer surface, or inhibition of lithium ion insertion/extraction to the positive electrode active material due to a conductive covering layer formed on the surface of the primary particles of the positive electrode active material, as in the related art, and insertion/extraction of lithium ions at the positive electrode takes place appropriately.

The carbon material with a smaller particle diameter leads to the lighter carbon material, so that it will manifest on the surface of the positive electrode mixture layer more readily. Such carbon material increases the proportion of carbon atoms relative to the total atoms on the surface of the positive electrode, so that it will be easy to render such proportion not less than 80%. Therefore, it will be preferable to use carbon material with an average particle diameter of not more than 230 nm.

In order to further curb the positive electrode active material containing the lithium-containing transition metal composite oxide from degrading when exposed to the atmosphere, it is preferable that the proportion of carbon atoms be large down to a particular depth from the surface of the positive electrode. It will therefore be preferable that the proportion of carbon atoms relative to the total atoms in the region extending to 30% in the thickness direction of the positive electrode mixture layer from the surface of the positive electrode be not less than 50%. Note that the proportion of carbon atoms relative to the total atoms in the region extending to 30% in the thickness direction of the positive electrode mixture layer is a value that was measured on a section made by cutting through the positive electrode in the thickness direction of the positive electrode mixture layer using an energy-dispersive X-ray fluorescence analyzer (EDX)

In the nonaqueous electrolyte secondary battery of the invention, it will also be possible to use a mixture of the above-described positive electrode active material and another positive electrode active material. In such a case, there will be no particular restriction on the other positive electrode active material in the mixture, provided that it is a compound that permits lithium to be inserted and removed reversibly. It is preferable to use a material with, for example, a layer structure, a spinel structure, or an olivine structure, that permits lithium insertion and removal while maintaining a stable crystal structure.

In the nonaqueous electrolyte secondary battery of the invention, there is no particular restriction on the negative electrode active material used for the negative electrode, provided that it is an item that permits lithium to be absorbed and desorbed reversibly. For example, a carbon material, a metal or alloy material that is alloyed with lithium, a metal oxide can be used. From a materials cost perspective, it will be preferable to use a carbon material for the negative electrode active material. For example, natural graphite, artificial graphite, mesophase pitch carbon fiber (MCF), mesocarbon microbeads (MCMB), coke, hard carbon, fullerene, carbon nanotubes can be used. From a perspective of enhancing the high cycling characteristics, it is particularly preferable to use a carbon material in which a graphite material is coated with low-crystalline carbon.

As the nonaqueous solvent used in the nonaqueous electrolyte of the nonaqueous electrolyte secondary battery of the invention, one of the generally known nonaqueous solvents that are commonly used in nonaqueous electrolyte secondary batteries of the related art can be used. For example, a cyclic carbonate such as ethylene carbonate, propylene carbonate, butylene carbonate or vinylene carbonate, or a chain carbonate such as dimethyl carbonate, methylethyl carbonate, or diethyl carbonate can be used. It will be particularly preferable to use a mixture of cyclic carbonate and chain carbonate, since this will give a nonaqueous solvent with low viscosity, low melting point, and high lithium ion conductivity. The ratio of cyclic carbonate to chain carbonate in such mixed solvent will preferably be in the range from 2 : 8 to 5 : 5 by volume.

An ionic liquid can be used as the nonaqueous solvent of the nonaqueous electrolyte. In such a case, there will be no particular restriction on the types of cations and anions, but a combination of pyridinium cations, imidazolium cations, or quaternary ammonium cations, as the cations, with fluoride-containing imide anions as the anions, will be particularly preferable from the perspectives of low viscosity, electrochemical stability, and hydrophobicity.

As the solute used in the nonaqueous electrolyte, one of the generally known lithium salts that are commonly used in nonaqueous electrolyte secondary batteries of the related art can be used. As such lithium salts, those that contain at least one element among P, B, F, O, S, N, and Cl can be used. More specifically, a lithium salt such as LiPF₆, LiBF₄, LiCF₃SO₃, LiN(FSO₂)₂, LiN(CF₃SO₂)₂, LiN(C₂F₅SO₂)₂, LiN(CF₃SO₂)(C₄F₉SO₂), LiC(C₂F₅SO₂)₃, LiAsF₆ or LiClO₄, or a mixture of these can be used. It will be especially preferable to use LiPF₆ in order to heighten the high cycling characteristics and durability in the nonaqueous electrolyte secondary battery.

There is no particular restriction on the material of the separator that is interposed between the positive and negative electrodes in the nonaqueous electrolyte secondary battery of the invention, provided that it is a material that prevents the positive and negative electrodes from contacting and causing short-circuiting, and that also yields lithium ion conductivity when impregnated with the nonaqueous electrolyte. For example, a separator made of polypropylene or polyethylene, or a polypropylene-polyethylene multilayered separator can be used.

### EFFECT OF THE INVENTION

In the nonaqueous electrolyte secondary battery of the invention, the surface of the positive electrode has a positive electrode mixture layer that contains a mixture of a conductive carbon material and a positive electrode active material that contains a lithium-containing transition metal composite oxide having a layer structure and represented by the general formula LiₐNiₓM_{(1 - x)}O₂ (where M represents one or more kinds of elements, and a and x satisfy the conditions 0<a≤1.2, 0.4≤x≤1, respectively), and the proportion of carbon atoms relative to the total atoms on the surface of the positive electrode is not less than 80%. This curbs degrading of the positive electrode active material containing the lithium-containing transition metal composite oxide when exposed to the atmosphere, and enables appropriate insertion/extraction of lithium ions at the positive electrode.

As a result, decline of the output characteristics following atmospheric exposure is prevented, and especially superior low-temperature output characteristics are obtained, in the nonaqueous electrolyte secondary battery of the invention.

### BRIEF DESCRIPTION OF DRAWINGS

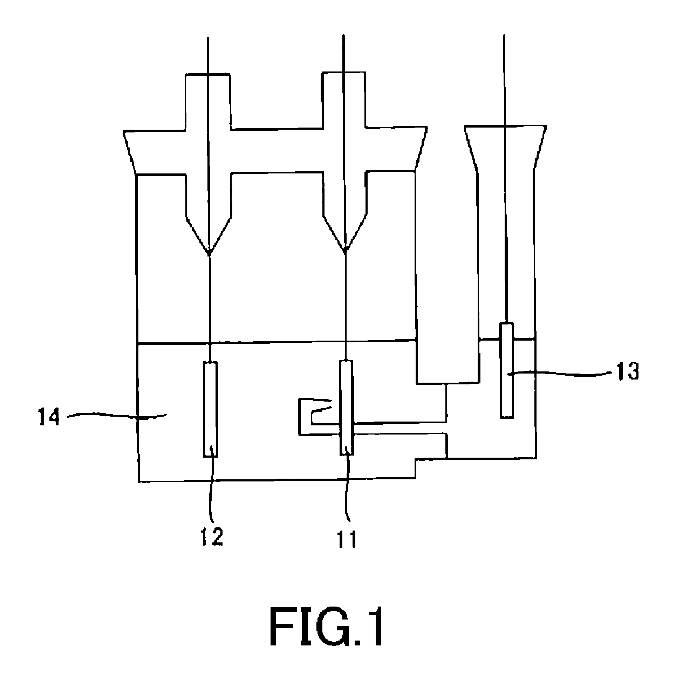

[Fig. 1] Fig. 1 is a schematic explanatory drawing of a 3-electrode test cell using the positive electrode produced in the Embodiment and Comparative Examples of the invention as working electrode.

### BEST MODE(S) FOR CARRYING OUT THE INVENTION

A preferred embodiment of the nonaqueous electrolyte secondary battery of the invention will now be described in detail, and it will be made clear through the use of comparative examples that decline of the low-temperature output characteristics following atmospheric exposure is curbed in the nonaqueous electrolyte secondary battery of such embodiment of the invention. It should be understood that the following embodiment does not limit the invention to the nonaqueous electrolyte secondary battery of the embodiment described below. Various modifications and variants thereof can be made without departing from the scope and spirit of the claims.

### Embodiment 1

For Embodiment 1, in order to produce the positive electrode active material containing lithium-containing transition metal composite oxide that is represented by the aforementioned general formula, nickel sulfate, cobalt sulfate, and manganese sulfate were used to prepare an aqueous solution containing nickel ions, cobalt ions and manganese ions inside a reaction vessel, subsequently the molar ratio of the nickel, cobalt and manganese in the aqueous solution was adjusted so as to be 5 : 3 : 2.

Next, the temperature of the aqueous solution was set at 50 °C. Aqueous sodium hydroxide was dripped into this aqueous solution to adjust the pH of the aqueous solution to be 9 to 12, thus obtaining a precipitate containing nickel, cobalt, and manganese. After filtering and rinsing of the precipitate, the precipitate was heat-treated at 300 °C in an air current containing oxygen, thereby obtaining a composite oxide of nickel, cobalt, and manganese (Ni_{0.5}Co_{0.2}Mn_{0.3})₃O₄.

Lithium carbonate was added to this nickel-cobalt-manganese composite oxide so that the molar ratio relative to the total of nickel, cobalt, and manganese was 1 : 15. After mixing, the resultant product was burned in the atmosphere for 15 hours at 980 °C.

Next, the burned material was pulverized and sieved to obtain a positive electrode active material containing Li_{1.15}Ni_{0.5}Co_{0.2}Mn_{0.3}O₂. Note that the average particle diameter of this positive electrode active material was approximately 6 µm.

Subsequently, the above-mentioned Li_{1.15}Ni_{0.5}Co_{0.2}Mn_{0.3}O₂ positive electrode active material, furnace black with an average particle size of 230 nm as conductive agent, and an N-methyl-2-pyrrolidone solution into which polyvinylidene fluoride as binding agent was dissolved were made adjustment so that the ratio of the positive electrode active material, conductive agent, and binding agent was 92 : 5 : 3 by mass, and were mixed to produce a positive electrode mixture slurry.

Next, this slurry was applied over a positive electrode collector consisting of aluminum foil at an applying speed of 1.0 m/min, and was dried under drying conditions of drying temperature 90 °C and air flow 5m/sec, after which it was rolled with rollers and then attached with an aluminum collection tab to produce the positive electrode.

At this point, the surface of the positive electrode thus produced was measured with an energy-dispersive X-ray fluorescence analyzer (made by JEOL DATUM LTD.). The result was that the proportion of carbon atoms relative to the total atoms on the surface of the positive electrode was 83%. Moreover, the concentration of carbon atoms calculated from the foregoing mass ratio of the positive electrode active material, conductive agent, and binding agent was around 42%, and thus it will be seen that the carbon atom concentration on the surface of the positive electrode was high.

The positive electrode was cut in the thickness direction of the positive electrode mixture layer, and the section was measured with the energy-dispersive X-ray fluorescence analyzer. The results were that the concentration of carbon atoms relative to the total atoms in the region extending to 30% from the surface of the positive electrode in the thickness direction of the positive electrode mixture layer was 54%, and the concentration of carbon atoms relative to the total atoms in the region extending from 30% to 60% from the surface of the positive electrode in the thickness direction of the positive electrode mixture layer was 48%. Thus the concentration of carbon atoms decreased at deeper portions from the surface of the positive electrode in the thickness direction of the positive electrode mixture layer.

The 3-electrode test cell of Embodiment 1 was produced by, as shown in Fig. 1, using the positive electrode produced in the foregoing manner as the working electrode 11, using metallic lithium for the opposite electrode 12 constituting the negative electrode and for the reference electrode 13, and using as the nonaqueous electrolyte 14 a mixed solution of ethylene carbonate, methylethyl carbonate and dimethyl carbonate in the ratio of 3 : 3 : 4 by volume to dissolve LiPF₆ therein at a concentration of 1 mol/L, and additionally dissolve vinylene carbonate at 1% by mass.

The positive electrode produced in the foregoing manner was atmospherically exposed while being kept for five days at a temperature of 30 °C and humidity of 60% inside a thermo-humidistat chamber. The positive electrode thus atmospherically exposed was used as the working electrode 11, thus producing a post-atmospheric-exposure 3-electrode test cell.

### (Comparative Example 1)

In Comparative Example 1, a positive electrode was produced in the same manner as in Embodiment 1, except that a vapor-grown carbon fiber (VGCF) was used instead of furnace black as the conductive agent to produce the positive electrode mixture slurry, the applying speed for applying the slurry over the positive electrode collector was altered to 0.5 m/sec, and the drying conditions for drying this were altered to drying temperature 120 °C and air flow 10 m/sec. The positive electrode produced in such manner was used as the working electrode 11 to prepare the 3-electrode test cell of Comparative Example 1 in the same manner as in Embodiment 1.

The surface of the positive electrode fabricated in such manner was measured with the energy-dispersive X-ray fluorescence analyzer in the same manner as in Embodiment 1. The result was that the proportion of carbon atoms relative to the total atoms in the surface of the positive electrode (the carbon atom concentration) was 74%. The section when the positive electrode was cut in the thickness direction of the positive electrode mixture layer was measured with the energy-dispersive X-ray fluorescence analyzer. The results were that the concentration of carbon atoms relative to the total atoms in the region extending to 30% from the surface of the positive electrode in the thickness direction of the positive electrode mixture layer was 32%, and the concentration of carbon atoms relative to the total atoms in the region extending from 30% to 60% from the surface of the positive electrode in the thickness direction of the positive electrode mixture layer was 60%. Thus the concentration of carbon atoms increased at deeper portions from the surface of the positive electrode in the thickness direction of the positive electrode mixture layer.

In Comparative Example 1, in the same manner as in Embodiment 1, the positive electrode produced in the foregoing manner was atmospherically exposed while being kept for five days at a temperature of 30 °C and humidity of 60% inside a thermo-humidistat chamber, and the positive electrode thus atmospherically exposed was used as the working electrode 11, thus producing a post-atmospheric-exposure 3-electrode test cell.

### (Comparative Example 2)

In Comparative Example 2, a positive electrode was produced in the same manner as in Embodiment 1, except that the same slurry as in Embodiment 1 was applied over a positive electrode collector consisting of aluminum foil at an applying speed of 2.0 m/sec, and the drying conditions for drying this were drying temperature 120 °C and air flow 8 m/sec. The positive electrode produced in such manner was used as the working electrode 11 to prepare the 3-electrode test cell of Comparative Example 2 in the same manner as in Embodiment 1.

Moreover, the surface of the positive electrode produced in such manner was measured with the energy-dispersive X-ray fluorescence analyzer, in the same manner as in Embodiment 1. The result was that the proportion of carbon atoms relative to the total atoms in the surface of the positive electrode (the carbon atom concentration) was 74%.

In Comparative Example 2, in the same manner as in Embodiment 1, the positive electrode produced in the foregoing manner was atmospherically exposed while being kept for 5 days at a temperature of 30 °C and humidity of 60% inside a thermo-humidistat chamber, and the positive electrode thus atmospherically exposed was used as the working electrode 11, thus producing a post-atmospheric-exposure 3-electrode test cell.

Then, on each of the 3-electrode test cells pre- and post-atmospheric exposure of Embodiment 1, Comparative Example 1, and Comparative Example 2 produced in the foregoing manners, constant-current charging was carried out under temperature of 25 °C in each case at current density of 0.2 mA/cm² up to 4.3 V (vs. Li/Li⁺), and constant-voltage charging was also carried out at constant voltage of 4.3 V (vs. Li/Li⁺) until the current density became 0.04 mA/cm², after which constant-current discharging was carried out at current density of 0.2 mA/cm² down to 2.5 V (vs. Li/Li⁺).

Next, when each of the above-mentioned 3-electrode test cells had been charged to 50% of its rated voltage, in other words, when each had reached a state of charge of 50%, 10-second duration charging and discharging was carried out from the open circuit voltage of each, at 0.08 mA/cm², 0.4 mA/cm², 0.8 mA/cm², and 1.6 mA/cm², under a low temperature of -30 °C in each case, and for each case the cell voltage after the 10 seconds was plotted against the current to determine the current (Ip value) at the cutoff voltage, and then the output of each 3-electrode test cell in a low-temperature environment of -30 °C was calculated. Designating the output of the pre-atmospheric exposure 3-electrode test cells of Embodiment 1, Comparative Example 1, and Comparative Example 2 as 100%, the output percentages of the post-atmospheric exposure 3-electrode test cells from Embodiment 1, Comparative Example 1, and Comparative Example 2 were obtained. The results are set forth in Table 1.

**[Table 1]**

| | Carbon atom concentration on positive electrode surface (%) | Output characteristics at -30 °C | |
|---|---|---|---|
| | | Pre-atmospheric exposure | Post-atmospheric exposure |
| Embodiment 1 | 83 | 100% | 77.3% |
| Comparative Example 1 | 74 | 100% | 72.0% |
| Comparative Example 2 | 74 | 100% | 69.5% |

As is plain from Table 1, when using a positive electrode having a positive electrode mixture layer that contains a mixture of a conductive carbon material and a positive electrode active material containing a lithium-containing transition metal composite oxide that has a layer structure, contains a large amount of nickel, and is represented by the foregoing general formula, the 3-electrode test cell of Embodiment 1, in which the concentration of carbon atoms relative to the total atoms on the positive electrode surface was not less than 80%, has a much smaller decline of post-atmospheric exposure output under low-temperature conditions, resulting in better low-temperature output characteristics in post-atmospheric exposure, compared with the 3-electrode test cells of Comparative Examples 1 and 2, in which the concentrations of carbon atoms relative to the total atoms on the positive electrode surface were under 80%.

The furnace black used as the conductive carbon material in Embodiment 1 and Comparative Example 2 has an average particle diameter of 230 nmm, which is smaller than that of the vapor-grown carbon fiber (VGCF) used in Comparative Example 1, and then the furnace black has the characteristic of rendering high the concentration of carbon atoms relative to the total atoms on the positive electrode surface.

The cell of Embodiment 1, in which the concentration of carbon atoms relative to the total atoms on the positive electrode surface was high, had a much smaller decline of post-atmospheric exposure output under low-temperature conditions compared with that of Comparative Example 2, despite using the same furnace black as the conductive carbon material. Thus it is seen that, regardless of the type of the conductive carbon material, the low-temperature output characteristics of post-atmospheric exposure are enhanced with the concentration of carbon atoms relative to the total atoms on the positive electrode surface being high.

### EXPLANATIONS OF LETTERS OR NUMERALS

- 11: Working electrode (positive electrode)
- 12: Opposite electrode (negative electrode)
- 13: Reference electrode
- 14: Nonaqueous electrolyte

## Claims

1. A nonaqueous electrolyte secondary battery comprising:
a positive electrode whose surface has a positive electrode mixture layer containing a mixture of a positive electrode active material and a conductive carbon material;
a negative electrode containing a negative electrode active material; and
a nonaqueous electrolyte in which a solute is dissolved in a nonaqueous solvent,
a lithium-containing transition metal composite oxide having a layer structure and represented by the general formula LiₐNiₓM₍₁₋ₓ₎O₂ (where M represents one or more kinds of elements, and a and x satisfy the conditions 0<a≤1.2 and 0.4≤x≤1, respectively) being used as the positive electrode active material, and
the proportion of carbon atoms relative to the total atoms on the surface of the positive electrode being made to be not less than 80%.

2. The nonaqueous electrolyte secondary battery according to claim 1, wherein the proportion of carbon atoms relative to the total atoms in the region extending to 30% in the thickness direction of the positive electrode mixture layer from the surface of the positive electrode is not less than 50%.

3. The nonaqueous electrolyte secondary battery according to claim 1, wherein the conductive carbon material has an average particle diameter of not more than 230 nm.

4. The nonaqueous electrolyte secondary battery according to claim 2, wherein the conductive carbon material has an average particle diameter of not more than 230 nm.
